# FASCICULE DE BREVET EUROPEEN

(11) **EP 1 967 933 B1**
(45) Date de publication et mention de la délivrance du brevet: **18.08.2010**
(21) Numéro de dépôt: 08290143.0
(22) Date de dépôt: 14.02.2008
(51) Int. Cl.: G05D 16/20, B67C 3/28

(54) **Procédé et dispositif de régulation de pression dans une cuve d'alimentation à liquide**
Verfahren und Vorrichtung zur Druckregelung in einem Druckvorratsbehälter für Flüssigkeiten
Method and device for controlling the pressure in a pressurised liquid reservoir tank

(30) Priorité: 20.02.2007 FR 0701193
(43) Date de publication de la demande: 10.09.2008
(73) Titulaire: SERAC GROUP, 72400 La Ferté-Bernard (FR)
(72) Inventeur: Gruson, Bertrand, 50290 Breville/Mer (FR)
(74) Mandataire: Fruchard, Guy

(56) Documents cités:
- EP-A- 1 275 612
- DE-A1- 2 727 446
- DE-B1- 1 559 688
- JP-A- 2006 264 755

## Description

La présente invention concerne un procédé et un dispositif de régulation de pression dans une cuve contenant un liquide, notamment bien que non exclusivement une cuve d'alimentation d'une installation de remplissage pondéral de récipients.

### ARRIERE PLAN DE L'INVENTION

On connaît des installations de remplissage pondéral de récipients comprenant des becs de remplissage reliés à la base d'une cuve d'alimentation commune. Lorsque la cuve d'alimentation est soumise à la pression atmosphérique, la pression à la base de la cuve est donnée par la hauteur de liquide dans la cuve. Pour obtenir un débit satisfaisant de liquide dans un grand nombre de becs de remplissage tout en ayant une cuve d'alimentation présentant des dimensions raisonnables il est donc nécessaire de mettre la cuve en pression en injectant de l'air comprimé au-dessus du liquide.

Pour permettre un dosage précis au moyen d'un dispositif pondéral, il est en outre souhaitable que la pression soit aussi constante que possible à l'entrée des becs de remplissage. A cet effet, la cuve d'alimentation est généralement maintenue à un niveau de liquide constant et la pression de l'air comprimé au-dessus du liquide est régulée en fonction d'une pression de consigne.

Il est ainsi connu des documents EP-A-1 275 612 et JP-A-2006 264755 des installations de remplissage de récipients par un fluide contenu dans une cuve sous pression.

Dans les dispositifs existants, cette régulation de la pression d'air au-dessus du liquide est réalisée au moyen d'une servovalve comportant un orifice d'entrée relié à une source d'air sous pression, un orifice de sortie relié à la cuve d'alimentation et un orifice d'échappement relié à l'air libre. La servovalve comporte en outre un organe de liaison commandée assurant soit la fermeture de l'orifice de sortie, soit la mise en relation de l'orifice d'entrée avec l'orifice de sortie, soit la mise en relation de l'orifice de sortie avec l'orifice d'échappement. La régulation de la pression d'air dans la cuve d'alimentation a donc lieu selon des à-coups qui risquent de donner lieu à un phénomène de pompage.

Il est prévu dans le document EP-A-1 275 612 une installation de remplissage ayant une cuve de liquide sous une pression régulée soit par ouverture d'orifices d'entrée d'air soit par ouverture d'évents d'échappement en fonction de la pression de la cuve.

Dans une application sans rapport avec l'invention, il est connu du document DE-A-1 559 688 du moyen de régulation de pression dans une cabine d'aéronef.

### OBJET DE L'INVENTION

Un but de l'invention est de proposer un procédé et un dispositif permettant d'assurer une régulation précise et régulière de la pression dans la cuve d'alimentation.

### RESUME DE L'INVENTION

En vue de la réalisation de ce but, on propose, selon l'invention, un procédé de régulation de pression dans une cuve contenant un liquide surmonté d'un gaz de pression, la cuve comprenant un orifice d'alimentation en gaz sous pression et un orifice d'échappement de gaz, ce procédé comportant les étapes d'alimenter la cuve avec un gaz selon un débit d'alimentation donné et de moduler un débit d'échappement en fonction d'un écart par rapport à une pression de consigne.

Ainsi, la pression dans la cuve est fonction de l'écart entre le débit d'alimentation et le débit d'échappement, de sorte qu'une modulation du débit d'échappement permet de faire varier à volonté et de façon continue la pression du gaz à l'intérieur de la cuve.

Selon un autre aspect de l'invention, on prévoit un dispositif de régulation de pression dans une cuve contenant un liquide, le dispositif comportant un orifice d'alimentation en gaz, un orifice d'échappement de gaz et un organe de modulation d'un débit différentiel entre le débit d'alimentation en gaz et le débit d'échappement de gaz.

Selon un mode de réalisation avantageux de l'invention, l'organe de modulation comporte un clapet disposé au-dessus du siège de l'orifice d'échappement.

Selon un mode de réalisation préféré, le clapet est relié à un organe de commande comprenant de préférence un noyau magnétique fixé au clapet et monté pour coulisser dans une bobine.

Par une alimentation appropriée de la bobine, il est alors possible de maintenir le clapet en lévitation entre un palier fluide d'air comprimé s'écoulant entre le clapet et l'orifice d'échappement de gaz, et un palier magnétique fonction du courant d'alimentation de la bobine.

### BREVE DESCRIPTION DES DESSINS

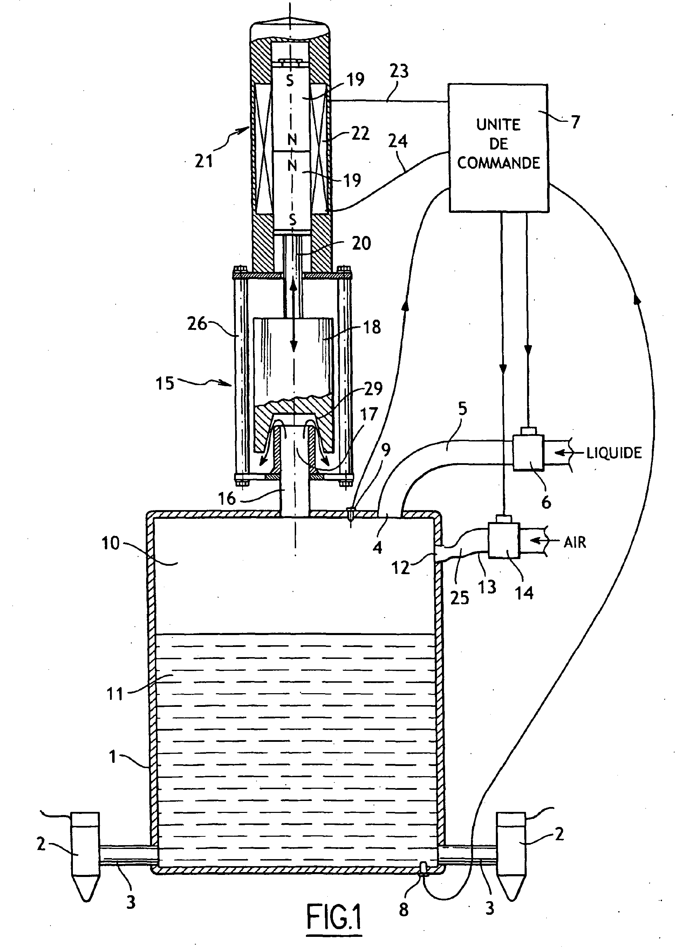

D'autres caractéristiques et avantages de l'invention apparaîtront à la lecture de la description qui suit d'un mode de réalisation particulier non limitatif en référence à la figure unique ci-jointe qui est une représentation schématique d'une cuve d'alimentation reliée à des becs de remplissage et équipée du dispositif de régulation de pression selon l'invention.

### DESCRIPTION DETAILLEE DE L'INVENTION

En référence à la figure, l'installation de remplissage comporte de façon connue en soi une cuve d'alimentation 1 à laquelle sont reliés des becs de remplissage 2, dont deux seulement ont été représentés sur la figure, par des conduits 3 qui débouchent dans le fond de la cuve d'alimentation 1. La cuve d'alimentation 1 est en outre équipée d'un orifice d'alimentation de liquide 4 relié à un conduit d'alimentation de liquide 5 sur lequel est montée une vanne 6 commandée par une unité de commande 7 en fonction des informations données par un capteur de pression totale 8 débouchant dans le fond de la cuve, et un capteur de pression de gaz 9 débouchant dans le haut de la cuve dans le volume de gaz 10 surmontant le liquide 11.

De façon également connue en soi, la cuve est pourvue d'un orifice d'alimentation en gaz 12 relié à un conduit d'air comprimé 13 comportant un détendeur commandé 14 relié à l'unité de commande 7.

Selon l'invention, la cuve d'alimentation 1 est reliée à un dispositif de modulation de pression généralement désigné en 15.

Dans le mode de réalisation particulier illustré sur la figure, le dispositif de modulation de pression comporte un conduit d'échappement de gaz 16 disposé verticalement et ayant une extrémité inférieure débouchant dans le volume de gaz comprimé 10 de la cuve d'alimentation 1. L'extrémité supérieure du conduit d'échappement 16 délimite un orifice d'échappement 17 et forme un siège pour un clapet formé par une masselotte 18 disposée au-dessus du siège de clapet en regard de celui-ci et comportant une cavité 29 venant coiffer le siège de clapet. La paroi latérale de la cavité 29 est de préférence tronconique pour permettre un dégagement des gaz s'échappant par l'orifice d'échappement 17 tout en assurant un centrage du clapet 18 lors des mouvements de celui-ci.

A sa partie supérieure, le clapet 18 est relié par une tige de liaison 20 à un organe de commande généralement désigné en 21. Dans le mode de réalisation illustré, l'organe de commande 21 comprend un noyau magnétique formé de deux aimants permanents 19 disposés pour générer un flux magnétique coaxial à une bobine 22 entourant le aimants permanents 19. La bobine 22 est montée sur un bâti fixe 26 rigidement fixé au conduit d'échappement 16. De préférence, les aimants permanents 19 sont montés de façon que des plots de même polarité soient en regard l'un de l'autre. La bobine 22 a une extrémité supérieure reliée à une unité de commande par un fil de liaison électrique 23 et l'extrémité opposée de la bobine est reliée à l'unité de commande par un fil de liaison électrique 24.

Par ailleurs, le conduit d'alimentation en gaz comprimé 13 comporte un orifice calibré 25 permettant d'alimenter la cuve 1 en gaz sous pression selon un débit donné précis qui est fonction de la pression commandée par le détendeur 14.

Au démarrage de l'installation, la cuve d'alimentation 1 est remplie de liquide à conditionner jusqu'à ce que le liquide atteigne un niveau maintenu constant de façon connue en soi en commandant la vanne 6 en fonction de signaux fournis par le capteur de pression 8. La bobine 22 est ensuite alimentée avec un courant continu dans un sens approprié pour que l'effort magnétique résultant sur les aimants permanents 19 s'ajoute au poids du clapet 18 pour plaquer celui-ci contre le siège entourant l'orifice d'échappement 17.

De l'air sous pression est admis par l'orifice d'alimentation en gaz 12 et au fur et à mesure de la montée en pression du volume 10 le courant d'alimentation de la bobine 22 est modifié par l'unité de commande 7 en fonction des informations de pression données par le capteur de pression de gaz 9 de façon à moduler le débit d'échappement à travers l'orifice d'échappement 17 en fonction d'un écart par rapport à une consigne de pression mémorisée dans l'unité de commande 7.

Le niveau de liquide continue à être maintenu constant par une commande de la vanne 6 en fonction d'une différence entre les signaux fournis par les capteurs de pression 8 et 9.

En l'absence d'alimentation de la bobine 22, la force appliquée sur le clapet est indépendante de la position du clapet et est fonction de la masse de la masselotte 18 et des aimants permanents 19 qui lui sont associés. Selon un mode de réalisation préféré de l'invention, la masselotte 18 et les aimants permanents 19 qui lui sont associés sont dimensionnés pour que lorsque la pression dans le volume 10 de la cuve 1 est égal à la pression de consigne, le poids du clapet et des éléments qui lui sont associés, équilibre la pression résultant du débit de gaz à travers l'orifice d'échappement 17 sans qu'il soit nécessaire d'alimenter la bobine 22. On minimise ainsi l'échauffement de la bobine 22 et la consommation d'électricité. La bobine 22 et le noyau magnétique sont alors de préférence disposés dans la position illustrée sur la figure pour laquelle un plan médian entre les pôles en regard des aimants permanents coïncide avec un plan à mi-hauteur de la bobine. Lorsque la pression varie dans le volume 10, le noyau magnétique s'écarte de cette position. La bobine est alors alimentée avec un courant circulant dans le sens approprié pour que le débit de gaz à travers l'orifice d'échappement 17 soit modulé de façon à corriger l'écart de pression par rapport à la pression de consigne. En raison des sens inversés des flux des aimants permanents 19, l'un des aimants permanents est alors soumis à une force de traction tandis que l'autre aimant permanent est soumis à une force de répulsion, de sorte que le noyau magnétique est soumis à une force double de celle qui serait obtenue avec un noyau magnétique comportant un aimant permanent unique s'étendant à travers la bobine. En outre, compte tenu des faibles déplacements du clapet pour assurer la régulation de pression, cette structure permet d'exercer sur le clapet une force de rappel indépendante de la position du clapet.

Lorsque l'on souhaite vider complètement la cuve d'alimentation 1, la commande de maintien à un niveau du liquide est interrompue et la pression de consigne dans le volume 10 est progressivement augmentée pour compenser la diminution de la hauteur de liquide dans la cuve.

Bien entendu, l'invention n'est pas limitée au mode de réalisation décrit et on peut y apporter des variantes de réalisation sans sortir du cadre de l'invention tel que défini par les revendications.

En particulier, le dispositif tel que décrit peut être réalisé avec un seul aimant permanent voire même sans aimant permanent. En l'absence d'aimant permanent, la position du noyau dans la bobine est alors simplement donnée par l'intensité du courant d'alimentation de la bobine. Dans ce cas, il est préférable de prévoir un noyau plus court que la bobine afin que la position du noyau dans la bobine permette d'exercer sur le noyau une force magnétique significative s'ajoutant ou se retranchant du poids de la masselotte 18. Le dispositif selon l'invention peut également être réalisé avec plusieurs bobines alimentées de façon séparée afin d'exercer des forces appropriées sur le noyau magnétique. La bobine 22 peut également être remplacée par un autre organe d'attraction magnétique tel qu'un anneau aimanté associé à un organe de manoeuvre commandé par l'unité de commande 7.

Le capteur de pression totale peut être disposé ailleurs que dans le fond de la cuve d'alimentation pour tenir compte d'une configuration particulière de l'installation. En particulier lorsque les becs de remplissage 2 ne sont pas directement reliés à la cuve mais par l'intermédiaire d'un répartiteur, le clapet 8 est de préférence fixé au répartiteur de sorte que la pression totale mesurée tient compte de la perte de charge dans la canalisation reliant le répartiteur à la cuve 1.

La commande par un dispositif magnétique peut être remplacée par une commande par un vérin pneumatique ou hydraulique qui assure également une force de rappel indépendante de la position du clapet contrairement à un ressort dont la force de rappel varie avec le degré de compression ou de traction.

Pour une plus grande rapidité de mise en oeuvre en début et en fin de cycle, on peut prévoir de moduler également le débit d'alimentation en fonction d'un écart lement le débit d'alimentation en fonction d'un écart par rapport à la pression de consigne en utilisant un orifice calibré de dimension variable ou en faisant varier la pression d'alimentation au moyen du détendeur 14.

## Revendications

1. Procédé de régulation de pression dans une cuve (1) contenant un liquide surmonté d'un gaz de pression, la cuve comprenant un orifice d'alimentation en gaz (12) et un orifice d'échappement de gaz (17), **caractérisé en ce qu'**il comporte les étapes d'alimenter la cuve avec un gaz selon un débit d'alimentation donné et de moduler un débit d'échappement en fonction d'un écart par rapport à une pression de consigne.

2. Procédé de régulation de pression selon la revendication 1, **caractérisé en ce qu'**il comporte l'étape de moduler également le débit d'alimentation en fonction de l'écart par rapport à la pression de consigne.

3. Dispositif de régulation de pression dans une cuve 1 comprenant un orifice d'alimentation en gaz (12) et un orifice d'échappement de gaz (17), **caractérisé en ce qu'**il comporte un organe (15) de modulation d'un débit différentiel entre un débit d'alimentation de gaz et un débit d'échappement de gaz.

4. Dispositif de régulation de pression selon la revendication 3, **caractérisé en ce qu'**il comporte un clapet disposé en regard de l'orifice d'échappement de gaz et relié à un organe de commande (21) exerçant sur le clapet une force indépendante de la position du clapet.

5. Dispositif de régulation de pression selon la revendication 3, **caractérisé en ce que** l'organe de modulation comporte un clapet (18) disposé au-dessus d'un siège de clapet entourant l'orifice d'échappement (17).

6. Dispositif de régulation de pression selon la revendication 5, **caractérisé en que** le clapet est relié à un organe de commande (21).

7. Dispositif de régulation de pression selon la revendication 6, **caractérisé en ce que** l'organe de commande comprend un noyau magnétique (19) fixé au clapet et associé à un organe d'attraction magnétique (22).

8. Dispositif de régulation de pression selon la revendication 3, **caractérisé en ce que** le noyau magnétique comporte au moins un aimant permanent (19) ayant un champ coaxial à l'organe d'attraction magnétique (22).

9. Dispositif de régulation de pression selon la revendication 8, **caractérisé en ce qu'**il comporte deux aimants permanents (19) ayant des pôles de même polarité en regard l'un de l'autre.

10. Dispositif de régulation de pression selon la revendication 9, **caractérisé en ce que** l'organe d'attraction magnétique est une bobine (22) et **en ce que** le clapet et le noyau magnétique associé sont dimensionnés pour qu'en l'absence de courant et pour une pression dans la cuve égale à la pression de consigne, le noyau soit dans une position pour laquelle un plan médian entre les pôles en regard des aimants coïncide avec un plan à mi-hauteur de la bobine (22).

## Claims

1. A method of regulating pressure in a vessel (1) containing a liquid surmounted by a pressurizing gas, the vessel having a gas feed orifice (12) and a gas exhaust orifice (17), the method being **characterized in that** it comprises the steps of feeding the vessel with gas at a given flow rate and of modulating the exhaust flow rate as a function of a difference relative to a setpoint pressure.

2. A method of regulating pressure according to claim 1, **characterized in that** it includes the step of also modulating the feed flow rate as a function of the difference relative to the setpoint pressure.

3. A pressure regulation device for regulating pressure in a vessel (1) having a gas feed orifice (12) and a gas exhaust orifice (17), the device being **characterized in that** it comprises a member (15) for modulating a differential flow rate between a gas feed rate and a gas exhaust rate.

4. A pressure regulation device according to claim 3, **characterized in that** it includes a valve member placed facing the gas exhaust orifice and connected to a control member (21) exerting a force on the valve member that is independent of its position.

5. A pressure regulation device according to claim 3, **characterized in that** the modulation member comprises a valve member (18) disposed over a valve seat surrounding the exhaust orifice (17).

6. A pressure regulation device according to claim 5, **characterized in that** the valve member is connected to a control member (21).

7. A pressure regulation device according to claim 6, **characterized in that** the control member comprises a magnetic core (19) fastened to the valve member and associated with a magnetic attraction member (22).

8. A pressure regulation device according to claim 3, **characterized in that** the magnetic core comprises at least one permanent magnet (19) having a field that is coaxial with the magnetic attraction member (22).

9. A pressure regulation device according to claim 8, **characterized in that** it has two permanent magnets (19) having poles of the same polarity facing each other.

10. A pressure regulation device according to claim 9, **characterized in that** the magnetic attraction member is a coil (22) and **in that** the valve member and the associated magnetic core are dimensioned so that in the absence of electric current and for a pressure in the vessel that is equal to the setpoint pressure, the core is in a position for which the midplane between the facing poles of the magnets coincides with a mid-height plane of the coil (22).

## Patentansprüche

1. Verfahren zur Druckregelung in einem Behälter (1), der eine Flüssigkeit enthält, über der ein Druckgas angeordnet ist, wobei der Behälter eine Gaszuleitungsöffnung (12) und eine Gasableitungsöffnung (17) umfasst, **dadurch gekennzeichnet, dass** das Verfahren die Schritte umfasst: Speisen des Behälters mit einem Gas entsprechend einer gegebenen Zufuhrmenge und Anpassen einer Ableitungsmenge in Abhängigkeit von einer Abweichung in Bezug auf einen Solldruck.

2. Verfahren zur Druckregelung nach Anspruch 1, **dadurch gekennzeichnet, dass** es ebenfalls den Schritt des Anpassens der Zufuhrmenge in Abhängigkeit von der Abweichung in Bezug auf den Solldruck umfasst.

3. Vorrichtung zur Druckregelung in einem Behälter (1), umfassend eine Gaszuleitungsöffnung (12) und eine Gasableitungsöffnung (17), **dadurch gekennzeichnet, dass** sie ein Element (15) zum Anpassen einer Differenzmenge zwischen einer Gaszufuhrmenge und einer Gasableitungsmenge umfasst.

4. Vorrichtung zur Druckregelung nach Anspruch 3, **dadurch gekennzeichnet, dass** die Vorrichtung ein Ventil umfasst, das gegenüber der Gaszuleitungsöffnung angeordnet und mit einem Stellelement (21) verbunden ist, das auf das Ventil eine von der Stellung des Ventils unabhängige Kraft ausübt.

5. Vorrichtung zur Druckregelung nach Anspruch 3, **dadurch gekennzeichnet, dass** das Anpassungselement ein Ventil (18) umfasst, das über einem Ventilsitz angeordnet ist, der die Ableitungsöffnung (17) umgibt.

6. Vorrichtung zur Druckregelung nach Anspruch 5, **dadurch gekennzeichnet, dass** das Ventil mit einem Stellelement (21) verbunden ist.

7. Vorrichtung zur Druckregelung nach Anspruch 6, **dadurch gekennzeichnet, dass** das Stellelement einen Magnetkern (19) umfasst, der an dem Ventil befestigt und mit einem magnetischen Anziehungselement (22) verbunden ist.

8. Vorrichtung zur Druckregelung nach Anspruch 3, **dadurch gekennzeichnet, dass** der Magnetkern mindestens einen Dauermagneten (19) umfasst, der ein zum magnetischen Anziehungselement (22) koaxiales Feld hat.

9. Vorrichtung zur Druckregelung nach Anspruch 8, **dadurch gekennzeichnet, dass** sie zwei Dauermagneten (19) umfasst, deren einander gegenüberliegende Pole die gleiche Polarität haben.

10. Vorrichtung zur Druckregelung nach Anspruch 9, **dadurch gekennzeichnet, dass** das magnetische Anziehungselement eine Spule (22) ist und dass das Ventil und der dazugehörige Magnetkern derart bemessen sind, dass bei Fehlen von Strom und bei einem Druck im Behälter, der gleich dem Solldruck ist, der Kern in einer Position ist, bei der eine Mittelebene zwischen den einander gegenüberliegenden Polen der Magnete mit einer Ebene auf halber Höhe der Spule (22) zusammenfällt.
